# EUROPEAN PATENT APPLICATION

(11) **EP 4 345 607 A1**
(43) Date of publication of application: **03.04.2024**
(21) Application number: 22198089.9
(22) Date of filing: 27.09.2022
(51) Int. Cl.: G06F 8/658

(54) **COMPUTER-IMPLEMENTED METHOD AND COMPUTER PROGRAM PRODUCT FOR PROVIDING A SOFTWARE PATCH, APPARATUS AND COMMUNICATION SYSTEM**

(71) Applicant: Siemens Aktiengesellschaft, 80333 München (DE)
(72) Inventor: Tinnes, Christof, 66287 Quierschied (DE); Hohenstein, Uwe, 85591 Vaterstetten (DE)
(74) Representative: Siemens Patent Attorneys

(57) **Abstract**

A computer-implemented method for providing a software patch to one device is proposed, comprising:
a) determining a model difference between an existing model and a new model,
b) transferring the determined model difference into a set of graphs,
c) applying a graph mining unit to the set of graphs for identifying types of closed subgraphs, wherein the identified types of closed subgraphs include an optimal type,
d) storing the optimal type and generating a reference to the stored optimal type,
e) substituting each of the identified types of closed subgraphs which corresponds to the optimal type with the generated reference for obtaining a compressed model difference and a compressed patch comprising the compressed model difference, and
f) encoding the compressed patch and transmitting it to the device.

## Description

The present invention relates to a computer-implemented method and to a computer program product for providing a software patch as well as to an apparatus and to a communication system for providing a software patch.

With the advent of the Internet of Things (IoT), so called Firmware Over-The-Air (FOTA) updates have become ubiquitous. New features and bugfixes are transferred to devices at runtime, without requiring a direct connection to a computer or other programming device. Many of these devices are connected via a cellular connection, leading to high costs for data transfer. Examples include devices in smart agriculture applications, smart gardening, smart manufacturing systems, wind energy, and vehicles.

Using cellular connections, FOTA updates are time-consuming and high costs can occur for the download of the updates. Also, during the update, the connection can be lost, and it can be necessary to retransmit the entire update. Additionally, devices, for example embedded devices, are often very constraint due to their limited storage capabilities.

Firmware is usually sent to embedded devices as a complete binary file. Conventionally, an embedded device reserves two storage partitions, an existing storage partition for the running firmware and a new storage partition for the next firmware update (new firmware). When a new firmware is downloaded, the new storage partition is selected as a boot partition. Then, the new firmware performs some initial tests and if everything works as expected, the device is finally rebooted using the new firmware.

The firmware binary files are usually compressed using lossless compression algorithms like Huffman Coding. These lossless compression algorithms used today work on sequences of data and compress "sequential patterns" in the data. Many firmware update algorithms transfer the updates block-wise and support resuming of failed updates, for example, in case of connection loss or failure in transmission of the blocks.

It is one object of the present invention to improve the updating of software, in particular firmware, of a device.

According to a first aspect, a computer-implemented method for providing a software patch, in particular a firmware patch, to at least one device is proposed. The method comprising:
a) providing an existing model and a new model, wherein the existing model describes an existing version of a software of the device and the new model describes a new version of the software,
b) determining a model difference between the existing model and the new model,
c) transferring the determined model difference by applying a machine-readable language on the determined model difference into a specific abstract graph which represents the determined model difference as a set of graphs,
d) applying a graph mining unit to the set of graphs for identifying, in dependence on specific parameters, specific types of closed subgraphs out of the set of graphs, wherein the identified specific types of closed subgraphs include an optimal specific type of a closed subgraph,
e) storing at least the optimal specific type of a closed subgraph and generating, in dependence on a subgraph compression pattern, a reference to the at least one stored optimal specific type of a closed subgraph,
f) substituting each of the identified specific types of closed subgraphs which corresponds to the optimal specific type of a closed subgraph with the generated reference for obtaining a compressed model difference,
g) providing a compressed patch comprising the compressed model difference and the subgraph compression pattern, and
h) encoding the compressed patch using an encoding algorithm and transmitting the encoded compressed patch as the software patch to the at least one device.

According to the first aspect, the updating of software, in particular firmware, of a device is improved by reducing the size of the updates.

With the above-described computer-implemented method, it is possible to perform a graph pattern-based compression by substituting at least each of the identified specific types of closed subgraphs which corresponds to the optimal specific type of a closed subgraph with the generated reference to obtain a compressed model difference. As a result, it is possible to provide a compressed patch including the compressed model difference with a reduced data amount (file size in bit) due to the graph pattern-based compression to the device.

This has the technical effect that an update, in particular a FOTA update, is provided to the device as a compressed patch with a reduced data amount which comprises only the compressed model difference and the subgraph compression pattern instead of providing the entire new model or an uncompressed model difference as an FOTA update to the device.

This advantageously reduces the data amount that has to be transmitted and downloaded for the FOTA update, thereby relieving the existing mobile cellular or wireless networks, reducing the time required to perform the update, and reducing the effort required for the update, especially in terms of costs.

In addition, algorithms used for FOTA updates so far only work on the sequential (binary) images and are thus not able to discover non-sequential structural patterns. Thus, by using the above-described method, it is possible in an advantageous manner, to use non-sequential structural patterns in the data transmission to the device due to utilizing specific abstract graphs, in particular abstract syntax graphs.

A computer-implemented method is a method which involves the use of a computer, a computer network or other programmable apparatus, where one or more features are realized wholly or partly by means of a computer program.

In particular, the firmware patch is a "firmware-over-the-air"-update which is a software update that is performed via a wireless radio interface or wireless radio link.

Specifically, the existing version of the software is a version which is still running on the device and/or by which the device is operated. In particular, the new version of the software is a version which is to be operated on the device or by means of which the device is to be operated.

A model, for example a data model, is an abstract model that organizes elements of data and standardizes how they relate to one another and to the properties of real-world entities such as an existing version of the software of the device. The respective model, for example, the existing model, the new model and/or the model difference, can be abstracted in different forms using a modeling language, such as Unified Modeling Language (UML). It can be represented as a metamodel using UML. Additionally or alternatively, it can be described and graphically represented by means of a concrete or abstract syntax. Further prior art examples in the context of models are referenced in references [1], [2] and [6].

Preferably, a machine-readable language is data in a format that can be processed by a computer. For example, the machine-readable language is formed as Extensible Markup Language (XML) .

A specific abstract graph is, for example, an abstract syntax graph. Alternatively, the specific abstract graph is an abstract semantic graph. A specific abstract graph comprises also an abstract syntax tree or a syntax tree.

For example, a graph mining unit is a unit for finding and extracting information from data sets. Further, when applying the graph mining unit to the set of graphs, the graph mining unit can additionally identify non-closed subgraphs out of the set of graphs representing the model difference. For an example of a graph mining unit, see reference [4].

Preferably, the at least optimal specific type of a closed subgraph is stored in a storage unit, in particular of an apparatus of a communication system. The storage unit of the apparatus can be connected with another storage unit of the communication system. Preferably, the at least one device can be configured to have access to the data of the further storage unit via a wireless connection via the communication system. Specifically, the at least one optimal specific type of a closed subgraph is stored as a contracted node in the storage unit. In particular, the contracted node is stored at a specific memory address of the storage unit and comprises all nodes, edges and/or information of the optimal specific type of a closed subgraph.

Specifically, a reference points to a data object such as a contracted node. In particular, a pointer can also refer to a data object. A reference or a pointer can be formed as a variable that caches a memory address. In particular, the reference references (points to) a location, such as a memory address, of the storage unit. For example, retrieving of the data object stored there is called dereferencing or backrefer-encing.

Preferably, the generated reference has a certain memory address, which has as a content the specific memory address of the stored contracted node in the storage unit is stored. Thus, the generated reference points to the specific memory address of the stored contracted node in the storage unit.

Referencing graphs, in particular of the optimal specific type of a closed subgraph, is advantageous for the data compression and thus data reduction obtained from at least the substituting according to step f) of the above-described method according to the first aspect by using references as illustrated by the following example:
Preferably, each graph and/or node of the set of graphs representing the determined model difference comprises respective subgraphs of the determined model difference or the determined model difference as a further set of graphs.

This means, if the optimal specific type of a closed subgraph has a size of 5 KByte (Kilobyte) and is four times within the determined model difference, when processing and/or transmitting this determined model difference including at least four times the optimal specific type of a closed subgraph, a size of 20 KByte arises for the model difference which has to be processed and/or then transmitted to the device. This is a very large amount of data, especially in low data rate wireless networks.

Instead, when using the storing, generating and substituting according to steps e), f) and g) of the above-described method according to the first aspect, the following situation arises:
Each of the identified specific types of closed subgraph which corresponds to the optimal specific type of a closed subgraph is substituted with the generated reference for obtaining the compressed model.

Thus, the obtained compressed model comprises four times the storage space of a reference to the stored specific memory address of the contracted node instead of four times the specific types of closed subgraphs which corresponds to the optimal specific type of a closed subgraph as in the example above. In this example, the use of references reduces the data amount to be processed and transmitted to the device from 20 KByte to 5 KByte, because only the optimal specific type of a closed subgraph has to be stored as a contracted node one time (5 KByte storage space) and is then transmitted in the compressed patch to the device. Then, preferably, the device decompresses the compressed patch at least by dereferencing the contracted node in dependence on the subgraph compression pattern four times to obtain the decompressed patch. Thus, the compressed model difference comprises at least only 5 KByte.

It should also be noted that a model difference can have several such specific types of closed subgraphs, which in turn can lead to further data amount savings in the same way. It should also be noted that several dozens, hundreds, thousands or millions of devices can receive this update, thus greatly reducing the load on the communication system or network. As a result, the compressed model difference has a reduced data amount.

Preferably, the substituting according to step f) is lossless since the optimal specific type of a closed subgraph is completely recoverable from the contracted node. Thus, the graph pattern-based compression by means of the substituting according to step f) of the above-described method according to the first aspect is lossless.

Moreover, the encoded compressed patch is transmitted as the software patch to the at least one device for providing the software patch to the at least one device.

According to an embodiment, a certain graph out of the set of graphs is identified as a specific type of a closed subgraph if the certain graph fulfills the specific parameters, wherein the specific parameters are fulfilled if the graph is present in the set of graphs with a specific frequency, has a specific size with respect to its number of nodes and/or edges and is inextendible, wherein a graph is inextendible if an adding of nodes and/or edges to the graph changes at least one of the specific parameters of the graph, in particular the specific frequency.

In other words, a graph is considered being inextendible or not extendible if an adding of nodes and/or edges to the graph would change the specific frequency of the graph in the set of graphs. For example, the set of graphs comprises three graphs, a first graph with the nodes "A-B-C", a further graph with the nodes "A-B-C" and another graph with the nodes "A-B-D". Further, in particular, if the graph "A" would be selected from this set of graphs, and a node "B" would be added to the graph "A", the graph "A-B" would arise. Since the graph "A" has the specific frequency three in the set of graphs and the graph "A-B" has also the specific frequency three in the set of graphs, an adding of the node "B" to the graph "A" has not changed the specific frequency of the graph, since it is still three. Thus, the graph "A" is considered being extendible. On the other hand, if the graph "A-B" would be selected from this set of graphs, and a node "C" would be added to the graph "A-B", the graph "A-B-C" would arise. Since the graph "A-B" has the specific frequency three in the set of graphs and the graph "A-B-C" has instead the specific frequency two in the set of graphs, an adding of the node "C" to the graph "A-B" has changed the specific frequency of the graph, since it is two. Thus, the graph "A-B" is considered being inextendible.

According to a further embodiment, identifying according to step d) further includes:
determining a compression ability for each identified specific type of closed subgraphs in dependence on the specific parameters for identifying at least the optimal specific type of a closed subgraph out of the identified specific types of closed subgraphs, wherein the optimal specific type of a closed subgraph has a maximum compression ability with respect to the specific frequency and the specific size.

This embodiment has the technical effect that it is ensured that in a first step, only those identified specific type of closed subgraphs, in particular the optimal specific type of a closed subgraph are used for the storing, generating and substituting according to steps e) and f), which have the most or the maximum compression ability with respect to the entire determined model difference. Thus, the graphs or subgraphs which have low or less compression ability with respect to the entire determined model difference are filtered out by the graph mining unit in the first step and are preferably used later at a later storing, generating and substituting according to steps e) and f). This reduces the data amount in the compressed model difference in an advantageous manner.

Preferably, the graph mining unit determines for each graph in the set of graphs the compression ability.

Specifically, a compression ability or a maximum compression ability defines which compression ability a graph has and which graph or graphs have the most or the maximum compression ability with respect to the entire determined model difference. Also the compression ability of graphs can be ranked in a descending order starting with the specific graph which has the maximum compression ability and then continuing with the specific graph which has a lower compression ability compared to the maximum compression ability. Preferably, the compression ability is a degree of how much data amount can be saved or reduced when later substituting the graph with this compression ability.

In particular, the specific frequency defines how frequent a graph is present in a selected set of graphs or in another graph.

Preferably, the specific size defines the size of a graph with respect to its data amount or file size, with respect to its number of nodes and/or edges and/or with respect to its information which is stored in these nodes and/or edges.

In particular, the more frequently a graph occurs in a set of graphs and the larger it is with respect to its file size, nodes and/or edges, the higher its likely compression ability.

According to a further embodiment, the substituting according to step f) further includes:
substituting at least a subset of nodes and/or edges of each of the identified specific types of closed subgraphs which corresponds to the optimal specific type of a closed subgraph with the generated reference for obtaining the compressed model difference.

Preferably, a graph is a structure amounting to a set of objects in which at least pairs of the objects are connected to each other. In particular, the objects are called nodes, and each related pair of nodes is connected by an edge. Preferably, each node and/or edge may contain information.

According to a further embodiment, the subgraph compression pattern defines which at least one subset of nodes and/or edges of the optimal specific type of a closed subgraph is used when generating the reference and defines, in dependence on which specific graph attributes the at least one subset of nodes and/or edges is used when generating the reference.

In particular, the term "when generating the reference" comprises a storing of the at least one subset of nodes and/or edges of the optimal specific type of a closed subgraph as a contracted node in dependence on the subgraph compression pattern and generating the reference to the at least one stored subset of nodes and/or edges of the optimal specific type of a closed subgraph as the contracted node.

Preferably, the subgraph compression pattern defines which nodes and/or edges of the optimal specific type of a closed subgraph are used when generating the reference and/or are used when storing the nodes and/or edges of the optimal specific type of a closed subgraph as the contracted node. Specifically, the storing of at least the nodes and/or edges of the optimal specific type of a closed subgraph as the contracted node and the later substituting can also be referred to as compressing at least the nodes and/or edges of the optimal specific type of a closed subgraph by the contracted node. In particular, the term "compressing" means a graph-pattern based compression of multiple nodes and/or edges into one certain contracted node.

Furthermore, the subgraph compression pattern comprises at least the generated reference and the further generated reference.

Further, specific graph attributes comprise node information and/or edge information of the subset of nodes and/or edges which are used when generating the reference. Preferably, node information and/or edge information comprise information indicative of a size or a file size in byte of a node and/or an edge or information indicative which node and/or edge of the subset of nodes and/or edges of the optimal specific type of a closed subgraph is connected which each other.

According to a further embodiment, the compressed model difference comprises a set of subgraphs, wherein the step d) further includes:
applying the graph mining unit to the set of subgraphs of the compressed model difference for identifying, in dependence on the specific parameters, specific types of closed subsubgraphs out of the set of subgraphs, wherein the identified specific types of closed subsubgraphs include an optimal specific type of a closed subsubgraph,
wherein the step e) further includes:
   storing the optimal specific type of a closed subsubgraph and generating, in dependence on the subgraph compression pattern, a further reference to the at least one stored optimal specific type of a closed subsubgraph,
wherein the step f) further includes:
substituting each of the identified specific types of closed subsubgraphs which corresponds to the optimal specific type of a closed subsubgraph with the generated further reference for obtaining a further compressed model difference.

In particular, the step g) further includes:
providing a further compressed patch comprising the further compressed model difference and the subgraph compression pattern, and wherein the step h) further includes:
encoding the further compressed patch using an encoding algorithm and transmitting the encoded further compressed patch as the software patch to the at least one device.

This embodiment has the same technical effects and advantages according to the method according to the first aspect with the addition that, compared to the method according to the first aspect, a further additional compression of the provided compressed patch is provided in the form of the further compressed patch. Thus, it is possible to provide a further compressed patch including the further compressed model difference with a reduced data amount (file size in bit) to the device.

Preferably, in other words, method steps d) to f) of this embodiment are performed on the compressed model difference, analogously to the method according to the first aspect, in order to obtain a greater data reduction compared to the method according to the first aspect.

According to a further embodiment, at least one of the existing model, the new model, the compressed patch and/or the compressed model difference is represented as a specific abstract graph.

Preferably, the existing model, the new model, the compressed patch and the compressed model difference are represented as a specific abstract graph, in particular as an abstract syntax graph.

According to a further embodiment, the encoding algorithm includes a first encoding scheme for transferring the compressed patch into a first data format for obtaining a compressed patch in the form of the first data format, wherein the encoding algorithm includes a second encoding scheme for transferring the compressed patch in the form of the first data format into a second data format for obtaining the encoded compressed patch, wherein the software patch is formed as a binary file.

In particular, a first encoding scheme is XML Metadata Interchange (XMI) (for example, see reference [5]).

Preferably, a first data format is XML which is the abbreviation for Extensible Markup Language.

Specifically, a second encoding scheme is an inflate algorithm (for example, see reference [3]).

For example, a second data format is a binary file.

According to a further embodiment, the transmitting in step g) is performed wireless, in particular by using a cellular network, a low power wide area network, in particular a long range wide area network, or a wireless local area network.

Advantageously, the method described according to the first aspect and its embodiments above is used in low power wide area networks, in particular in long range wide area networks. In these networks, only a small data amount to be transmitted is allowed. By means of the method described according to the first aspect and its embodiments above, it is possible to reduce the data amount to be transmitted in such a way that this meets the requirements for data transmission in low power wide area networks, in particular in long range wide area networks.

For example, a cellular network is formed as a LTE-M network (Long-Term Evolution-M) or a Nb-IoT network (Narrow band-Iot). Further, examples of a low power wide area network are sigfox, mioty and symphony link. In particular, mioty is a low-power wide-area network (LPWAN) protocol and symphony link is a LPWAN.

According to a further embodiment, the device is formed as an end-device, in particular a mobile end-device, as an IoT-device or as a field device.

For example, an end-device is a device that forms an input or an output device in networked systems. It is directly connected to the local area networks or wide area networks and is used for input and output of information.

In particular, an IoT-device (Internet of Things-device) is at least any device that has a sensor attached to it and can transmit data from one object to another or to users by means of the internet. For example, IoT-devices include wireless sensors, software, actuators, computer devices and more.

A field device is a technical device, for example in the field of automation technology, that is directly related to a production process. In automation technology, the term "field" refers to the area outside control cabinets or control rooms. Field devices can thus be both actuators and sensors in factory and process automation. Preferably, the field devices are then connected to a control and management system, usually via a field bus, or increasingly also via real-time ethernet.

According to a further embodiment, the method further comprises:
i) updating the existing version of the software of the at least one device to the new version of the software by processing the transmitted encoded compressed patch on the at least one device.

According to a further embodiment, the processing according to step i) includes:
decompressing the transmitted encoded compressed patch by using a specific decompression algorithm which uses the subgraph compression pattern to obtain a decompressed patch,
copying the software, in particular firmware, comprising the existing model running on the at least one device to a new storage partition of the at least one device,
applying the decompressed patch on the existing model of the software for updating the existing version of the software of the at least one device to the new version of the software.

For example, a specific decompression algorithm is a deflate algorithm which is a combination of LZ77 (Lempel-Ziv 77) and Huffman coding (for example, see reference [3]).

Preferably, the decompressing of the transmitted encoded compressed patch by using a specific decompression algorithm which uses the subgraph compression pattern to obtain a decompressed patch includes a step of dereferencing or backreferencing to the stored contracted node by means of the generated reference in dependence on the subgraph compression pattern for restoring at least the optimal specific type of a closed subgraph out of the stored contracted node.

Any embodiment of the first aspect may be combined with any embodiment of the first aspect to obtain another embodiment of the first aspect.

According to a second aspect, a computer program product is proposed which comprises a program code for executing the computer-implemented method according to the first aspect or an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, an apparatus, in particular a server unit, for providing a software patch, in particular a firmware patch, to at least one device is proposed. The apparatus comprising:
a first provisioning unit for providing an existing model and a new model, wherein the existing model describes an existing version of a software of the device and the new model describes a new version of the software,
a determination unit for determining a model difference between the existing model and the new model,
a transfer unit for transferring the determined model difference by applying a machine-readable language on the determined model difference into a specific abstract graph which represents the determined model difference as a set of graphs,
an application unit for applying a graph mining unit to the set of graphs for identifying, in dependence on specific parameters, specific types of closed subgraphs out of the set of graphs, wherein the identified specific types of closed subgraphs include an optimal specific type of a closed subgraph,
a storage unit for storing at least the optimal specific type of a closed subgraph and for generating, in dependence on a subgraph compression pattern, a reference to the at least one stored optimal specific type of a closed subgraph,
a substitution unit for substituting each of the identified specific types of closed subgraphs which corresponds to the optimal specific type of a closed subgraph with the generated reference for obtaining a compressed model difference,
a second provisioning unit for providing a compressed patch comprising the compressed model difference and the subgraph compression pattern, and
an encoding unit for encoding the compressed patch using an encoding algorithm and for transmitting the encoded compressed patch as the software patch to the at least one device.

The technical effects and advantages described for the computer-implemented method according to the first aspect apply equally to the apparatus according to the third aspect.

Further, embodiments and features described with reference to the computer-implemented method according to the first aspect apply mutatis mutandis to the apparatus according to the third aspect.

In particular, the server unit is a cloud device.

The respective unit, e.g. the graph mining unit, the storage unit or the server unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

According to a fourth aspect, a communication system for providing a software patch, in particular a firmware patch, to at least one device is proposed. The communication system comprises
the apparatus according to the third aspect, and
the at least one device, in particular formed as an end-device,
wherein the apparatus is configured to transmit the software patch to the at least one device and the at least one device is configured to update the existing version of the software of the at least one device to the new version of the software by processing the software patch on the at least one device.

The technical effects and advantages described for the computer-implemented method according to the first aspect apply equally to the communication system according to the fourth aspect.

Moreover, embodiments and features described with reference to the computer-implemented method according to the first aspect apply mutatis mutandis to the communication system according to the fourth aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Figs. 1A - 1F: show graphical diagrams illustrating the steps of a computer-implemented method for providing a software patch according to an embodiment;
- Fig. 2: shows a block diagram illustrating the steps of a computer-implemented method for providing a software patch according to an embodiment;
- Fig. 3: shows an apparatus for providing a software patch according to an embodiment; and
- Fig. 4: shows a block diagram of a communication system for providing a software patch according to an embodiment.

In the Figures, like reference numerals designate like or functionally equivalent elements, unless otherwise indicated.

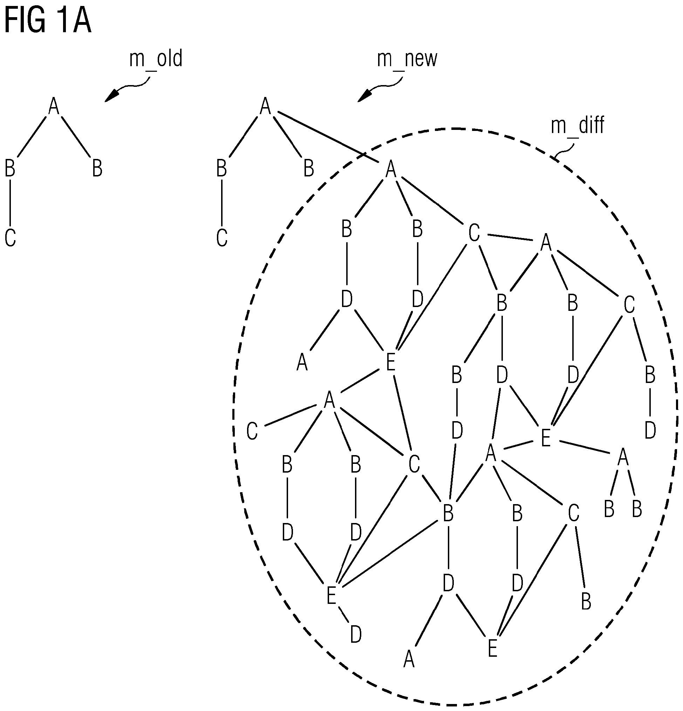

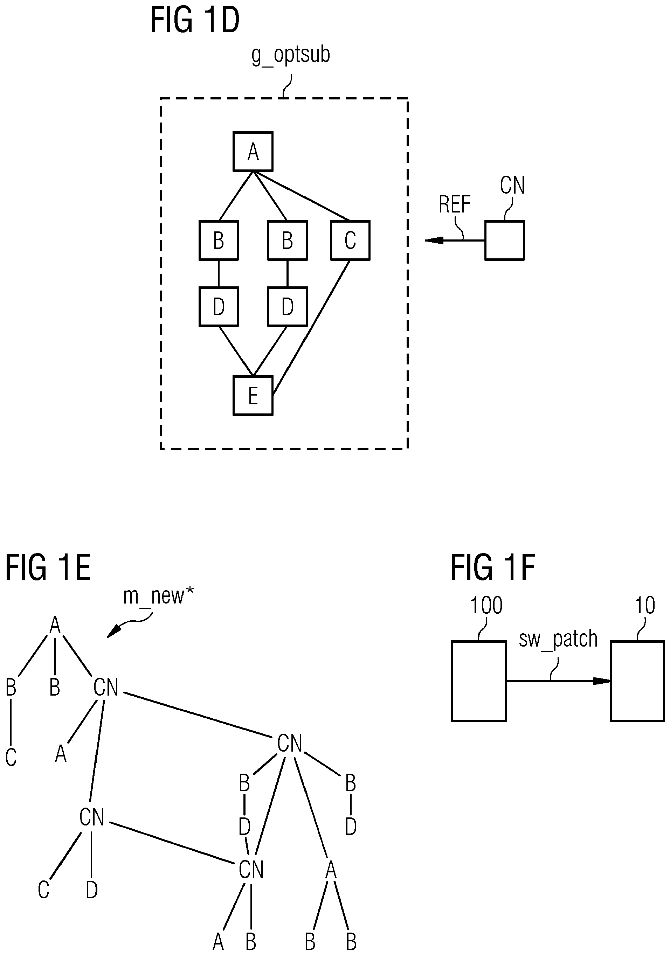

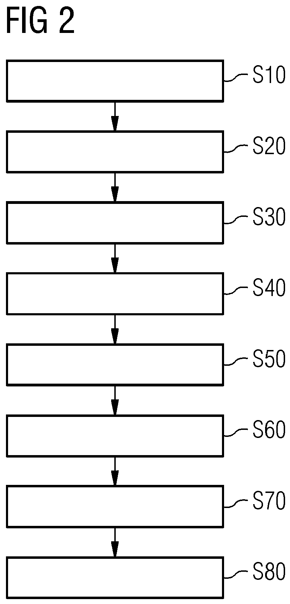

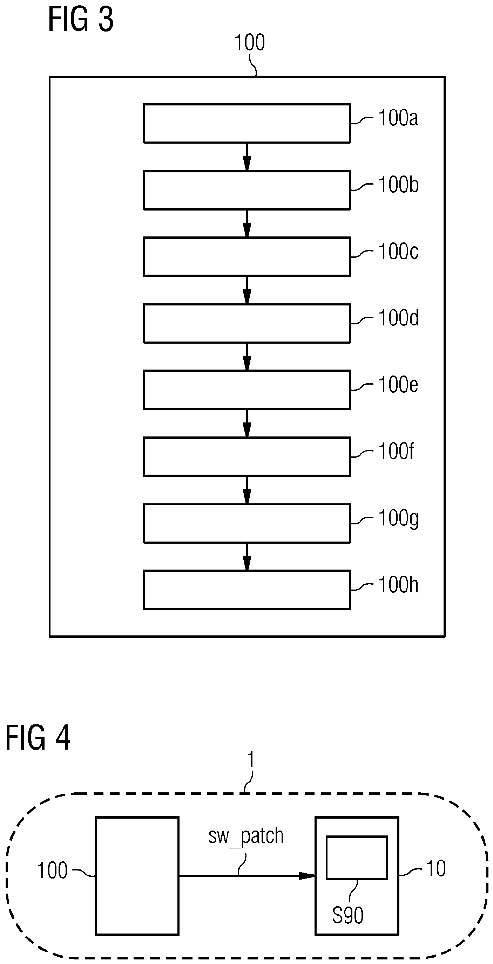

Figs. 1A - 1F show graphical diagrams illustrating the method steps of a computer-implemented method for providing a software patch sw_patch, in particular a firmware patch, to at least one device 10 (see Figs. 1F and 4) according to an embodiment. The computer-implemented method comprises the steps S10 to S80 of Fig. 2. In addition, references to the method steps S10 to S80 of Fig. 2, which shows the method for providing a software patch sw_patch according to an embodiment in a schematic block diagram, are indicated in parentheses in the following explanations of Figs. 1A - 1F.

Fig. 1A shows an existing model m_old and a new model m_new. The existing model m_old has a node "A", two nodes "B" and a node "C" which are connected with each other as can be seen in Fig. 1A. The new model m_new has also the node "A", the two nodes "B" and the node "C". In addition to the existing model m_old, the new model m_new comprises seven times a node "A", thirteen times a node "B", five times a node "C", eleven times a node "D" and four times a node "E" which are connected with each other according to Fig. 1A.

Thus, in Fig. 1A, the existing model m_old and the new model m_new are provided, wherein the existing model m_old describes an existing version of a software of the device 10 and the new model m_new describes a new version of the software (see method step S10 of Fig. 2).

Further, in Fig. 1A, a model difference m diff between the existing model m_old and the new model m_new is determined (see method step S20 of Fig. 2). The model difference m_diff is denoted in Fig. 1A with the dotted line and thus comprises seven times the node "A", thirteen times the node "B", five times the node "C", eleven times the node "D" and four times the node "E" which are connected with each other according to Fig. 1A.

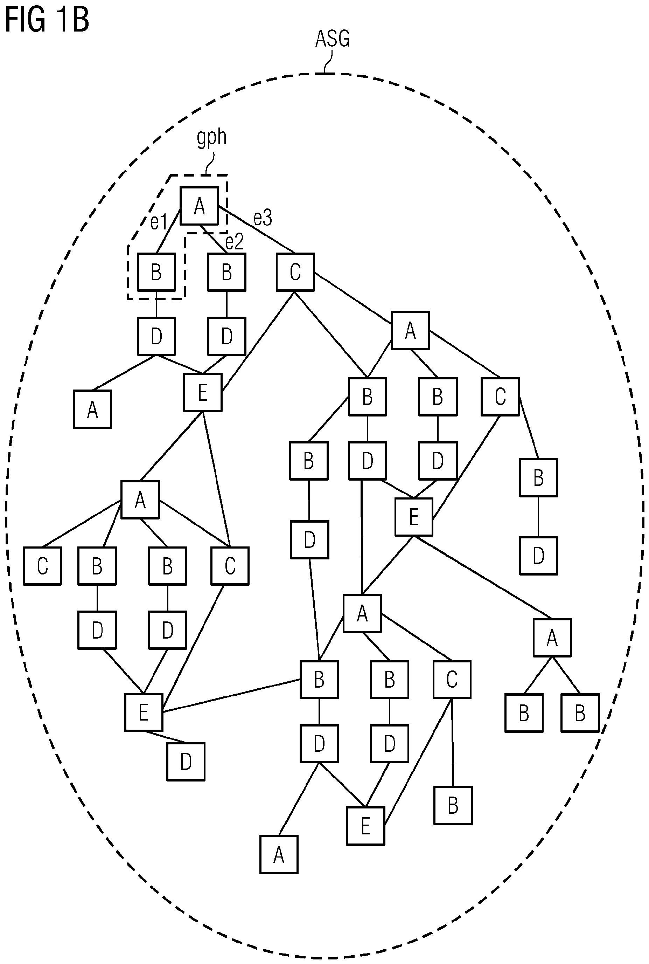

In the next step and in Fig. 1B, the determined model difference m diff is transferred by applying a machine-readable language on the determined model difference m_diff into a specific abstract graph ASG which represents the determined model difference m_diff as a set of graphs gph (see method step S30 of Fig. 2).

In Fig. 1B, a graph gph of the set of graphs gph can comprise the nodes "A" and "B" and a first edge e1 which connects the nodes "A" and "B" with each other. Another graph gph (not shown) can comprise the nodes "A" and "B" and a second edge e2 which connects the nodes "A" and "B" with each other or can comprise the nodes "A" and "C" and a third edge e3 which connects the nodes "A" and "B" with each other. In addition, a further graph gph (not shown) can comprise the nodes "B" and "D" and "E" or "C" and "E" and so on. In Fig. 1B, at least the first edge e1, the second edge e2 and the third edge e3 are formed multiple times (not shown) in the specific abstract graph ASG, for example, the first edge e1 or the second edge e2 between every connection between the nodes "A" and "B" and the third edge e3 between every connection between the nodes "A" and "C". Further, Fig. 1B comprises multiple other edges between different nodes (not shown). In Fig. 1B, each connection between two nodes including at least an edge and/or each node itself can be represented as a graph gph of the set of graphs gph. Moreover, the specific abstract graph ASG is in Fig. 1B formed as an abstract syntax graph.

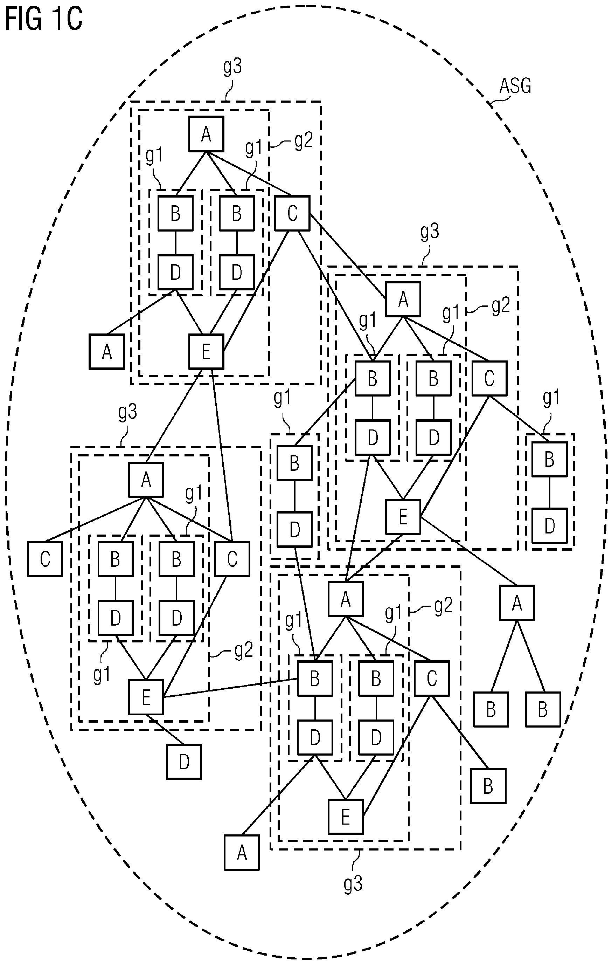

Next, in Fig. 1C, a graph mining unit is applied to the set of graphs gph for identifying, in dependence on specific parameters, specific types of closed subgraphs out of the set of graphs gph, wherein the identified specific types of closed subgraphs include an optimal specific type g_optsub of a closed subgraph (see Fig. 1D) (see method step S40 of Fig. 2). In Fig. 1C, an example of an identified specific type of a closed subgraph is the closed subgraph g3. Further, the graph mining unit is applied to the set of graphs gph for identifying, in dependence on specific parameters, also specific types of non-closed subgraphs (not shown) out of the set of graphs gph. In Fig. 1C, an example of an identified specific type of a non-closed subgraph is a first subgraph g1 or a second subgraph g2.

This is explained in more detail below for the example in Fig. 1C:
Further, above identifying, in particular according to method step S40, includes a further step of determining a compression ability for each identified specific type of closed subgraphs in dependence on the specific parameters for identifying at least the optimal specific type of a closed subgraph g_optsub of the identified specific types of closed subgraphs. Also, the compression ability is determined for at least the non-closed subgraphs such as at least the first and second subgraphs g1, g2.

A certain graph out of the set of graphs gph (see Fig. 1B) is identified as a specific type of a closed subgraph if the certain graph fulfills the specific parameters, wherein the specific parameters are fulfilled if the graph is present in the set of graphs gph with a specific frequency, has a specific size with respect to its number of nodes and/or edges and is inextendible, wherein a graph is inextendible if an adding of nodes and/or edges to the graph changes at least one of the specific parameters of the graph, in particular the specific frequency.

As mentioned above, each graph and/or node of the set of graphs gph representing the determined model difference m_diff (see Fig. 1A) can comprise respective subgraphs of the determined model difference m_diff or the determined model difference m diff as a further set of graphs. Thus, in the set of graphs gph representing the determined model difference m_diff (see Fig. 1A), at least the first subgraph g1, the second subgraph g2 and the closed subgraph g3 can occur multiple times with a specific frequency, respectively. Thus, the specific abstract graph ASG representing the determined model difference according to Fig. 1C can comprise multiple times at least the first subgraph g1, the second subgraph g2 and the closed subgraph g3. In the specific example of Fig. 1C, the first subgraph g1 occurs with a specific frequency of 10 in the specific abstract graph ASG, the second subgraph g2 occurs with a specific frequency of 4 in the specific abstract graph ASG and the closed subgraph g3 occurs also with a specific frequency of 4 in the specific abstract graph ASG. The specific abstract graph ASG in Fig. 1C additionally comprises further single nodes such as three times the node "A", three times the node "B", one time the node "C" and one time the node "D" which are connected with the respective first and/or second subgraphs g1, g2 and/or the respective closed subgraphs g3 as shown in Fig. 1C.

First, the first subgraph g1 is identified as specific type of a non-closed subgraph since it does not fulfill the specific parameters.

As mentioned above and shown in Fig. 1C, the first subgraph g1 has a specific frequency of 10, has two nodes and one edge and has a determined compression ability of 87. This means, for example, that the first subgraph g1 occurs in the specific abstract graph ASG representing the determined model difference 10 times. Preferably, the second subgraph g2 has a specific frequency of 4, has six nodes and six edges and has a determined compression ability of 154 as well as the closed subgraph g3 has a specific frequency of 4, has seven nodes and eight edges and has a determined compression ability of 196 (see also Fig. 1C).

In particular, the higher the compression ability of a graph, the specific frequency and the specific size the more is the size of the later data reduction in the compressed model difference.

Thus, the first subgraph g1 has a high specific frequency compared to the second subgraph g2 and the closed subgraph g3, but the first subgraph g1 has only two nodes and a low compression ability compared to the second subgraph g2 and the closed subgraph g3 since, for example, by substituting a subgraph with only two nodes and the low compression ability of 87 (not considered the data amount of a node), the compression ability is low compared to a subgraph with, for example 6, 10, 25, 50, 100, 150, 500, 1000 or more nodes and/or edges. Thus, the first subgraph g1 does not fulfill the specific parameters at least with respect to the specific size and is thus a specific type of a non-closed subgraph. Further, the first subgraph g1 has also a low compression ability with respect to the second subgraph g2 and the closed subgraph g3.

Further, the second subgraph g2 has a middle specific frequency compared to the first subgraph g1 but has a high compression ability and a greater specific size compared to the first subgraph g1 since, for example, by substituting a subgraph with six nodes, six edges and the middle specific frequency, the compression ability is higher compared to a subgraph with only one or two nodes and the compression ability of the first subgraph g1. Further, if a node would be added to the second subgraph g2, for example the node "C" (see Fig. 1C), the second subgraph g2 would become the closed subgraph g3. This means that the second subgraph g2 is extensible and does thus not fulfill the specific parameters at least with respect to the inextendibility. As mentioned above, a graph is inextendible if an adding of at least nodes to the graph gph (see Fig. 1B) changes at least one of the specific parameters of the graph gph, in particular the specific frequency. Since by adding the node "C" to the second subgraph g2, the second subgraph g2 becomes the closed subgraph g3, and no specific frequency of the second subgraph g2 compared to the closed subgraph g3 does change because the second subgraph g2 and the closed subgraph g3 have the same specific frequency of 4. Therefore, an adding of the node "C" to the second subgraph g2 does not change the specific parameters of the second subgraph g2 with respect to the specific frequency. Thus, the second subgraph g2 does not fulfill the specific parameters at least with respect to the inextendibility and is hence a non-closed subgraph.

Moreover, the subgraph g3 (or "closed subgraph g3" after the identification that the subgraph g3 is a closed subgraph) has a middle frequency compared to the first subgraph g1 but the subgraph g3 has a high compression ability compared to the first subgraph g1 since, for example, by substituting a subgraph with seven nodes, eight edges and the middle specific frequency, the compression ability is higher compared to a subgraph with only one or two nodes and the compression ability of the first subgraph g1.

Further, if a node would be added to the subgraph g3, for example a node "X" (not shown), the subgraph g3 would become a further subgraph (not shown) which is, for example only eight times present (not shown) in the specific abstract graph ASG. This means that the subgraph g3 is inextensible and does thus fulfill the specific parameters with respect to the specific size, the specific frequency and the inextendibility. Since by adding the node "X" to the subgraph g3 and becoming the further subgraph, the specific frequency of the further subgraph compared to the subgraph g3 does change because the further subgraph and the subgraph g3 do not have the same specific frequency. Therefore, an adding of the node "X" to the subgraph g3 does change the specific parameters of the subgraph g3 with respect to the specific frequency. Thus, the subgraph g3 does fulfill the three specific parameters and is hence a closed subgraph g3. Further, the closed subgraph g3 has the most nodes, is a closed subgraph and has therefore, together with its specific frequency of 4, the maximum compression capability of 196. Thus, the closed subgraph g3 is the optimal specific type g_optsub (see Fig. 1D) of a closed subgraph. It should be noted that the closed subgraph g3 occurs only exemplarily with a specific frequency of 4 in the determined model difference in Fig. 1C. In embodiments not shown, the closed subgraph g3 as well as the first and second subgraphs g1, g2 may also be present with a specific frequency of 12, 25, 50, 75, 100, 250, 500, 1000 or more in the ASG representing the data model difference. Accordingly, the amount of substitutions is then also larger, which in turn leads to a reduced data amount to be transmitted in the compressed patch to the device 10 (see Figs. 1F and 4).

Then, in Fig. 1D, the optimal specific type g_optsub of a closed subgraph is stored as a contracted node CN in a storage unit 100e (see Fig. 3). Next, in dependence on a subgraph compression pattern, a reference REF to the at least one stored optimal specific type g_optsub of a closed subgraph, in particular to the contracted node CN, is generated (see method step S50 of Fig. 2). In other words, the reference REF points to a specific address of the stored contracted node CN in the storage unit 100e (see Fig. 3).

Thus, the contracted node CN comprises the nodes "A", "B", "B", "C", "D", "D" and "E" and the edges between these nodes according to Fig. 1D. Preferably, the subgraph compression pattern in this case comprises the information concerning the nodes "A", "B", "B", "C", "D", "D" and "E" and the edges between these nodes of the optimal specific type g_optsub of a closed subgraph. Therefore, the subgraph compression pattern defines which at least one subset of nodes and/or edges of the optimal specific type g_optsub of a closed subgraph is used when generating the reference REF and defines, in dependence on which specific graph attributes the at least one subset of nodes and/or edges is used when generating the reference REF.

Next, in Fig. 1E, each of the identified specific types of closed subgraphs which corresponds to the optimal specific type g_optsub of a closed subgraph are substituted with the generated reference REF for obtaining a compressed model difference (see method step S60 of Fig. 2). Further, the substituting according to step S60 further includes a substituting of at least a subset of nodes and/or edges of each of the identified specific types of closed subgraphs which corresponds to the optimal specific type g_optsub of a closed subgraph with the generated reference REF for obtaining the compressed model difference. The substitution of nodes and/or edges is exemplified by Fig. 1E using the new model m_new of Fig. 1A. In the specific new model m_new* of Fig. 1E, the determined model difference m_diff (see Fig. 1A) would now be replaced by multiple contracted nodes CN due to the generated reference REF (see Fig. 1D) to the contracted node CN and thus to the stored optimal specific type g_optsub of a closed subgraph. Thus, as can be seen in Fig. 1C, the closed subgraph g3 which is the optimal specific type g_optsub of a closed subgraph has a specific frequency of four in the specific abstract graph ASG representing the determined model difference. Consequently, the specific new model m_new* in Fig. 1E now has four times the contracted node CN and the remaining nodes of the determined model difference and the new model m new, namely four times the node "A", seven times the node "B", two times the node "C" and three times the node "D" which are connected with each other according to Fig. 1E.

Further, a compressed patch comprising the compressed model difference and the subgraph compression pattern is provided (not shown) (see method step S70 of Fig. 2). In addition, in Fig. 1F, the compressed patch is encoded using an encoding algorithm.

Furthermore, in Fig. 1F, the encoding algorithm includes a first encoding scheme for transferring the compressed patch into a first data format for obtaining a compressed patch in the form of the first data format, wherein the encoding algorithm includes a second encoding scheme for transferring the compressed patch in the form of the first data format into a second data format for obtaining the encoded compressed patch, wherein the software patch sw_patch is formed as a binary file. Moreover, the encoded compressed patch is the software patch sw_patch (see Figs. 1F and 4).

Then, the encoded compressed patch formed as the software patch sw_patch is transmitted from an apparatus 100 (see also Figs. 3 and 4) to the at least one device 10 (see method step S80 of Fig. 2). This transmitting is preferably performed wireless, in particular by using a long range wide area network. In embodiments, the transmitting can also be performed wireless, in particular by using a cellular network or a wireless local area network.

In an embodiment (not shown), the compressed model difference comprises a set of subgraphs, wherein the step S40 further includes:
applying the graph mining unit to the set of subgraphs of the compressed model difference for identifying, in dependence on the specific parameters, specific types of closed subsubgraphs out of the set of subgraphs, wherein the identified specific types of closed subsubgraphs include an optimal specific type of a closed subsubgraph, wherein the step S50 further includes:
   storing the optimal specific type of a closed subsubgraph and generating, in dependence on the subgraph compression pattern, a further reference to the at least one stored optimal specific type of a closed subsubgraph,
wherein the step S60 further includes:
   substituting each of the identified specific types of closed subsubgraphs which corresponds to the optimal specific type of a closed subsubgraph with the generated further reference for obtaining a further compressed model difference.

In addition, the existing model m_old (see Fig. 1A), the new model m_new (see Fig. 1A), the specific new model m_new* (see Fig. IE), the compressed patch (not shown) and/or the compressed model difference (not shown) is represented as a specific abstract graph.

Fig. 2 shows a block diagram illustrating the steps of a computer-implemented method for providing a software patch sw_patch (see Figs. 1F and 4) to at least one device 10 (see Fig. 1F and 4) according to an embodiment. The respective method steps S10 - S80 have already been explained above in terms of Figs. 1A - 1F, which is why, in order to avoid repetitions, the method steps S10 - S80 are not explained again.

Fig. 3 shows an apparatus 100 for providing a software patch sw_patch (see Fig. 1F and Fig. 4), in particular a firmware patch, to at least one device 10 (see Fig. 1F and Fig. 4) according to an embodiment. The apparatus 100 comprises a first provisioning unit 100a, a determination unit 100b, a transfer unit 100c, an application unit 100d, a storage unit 100e, a substitution unit 100f, a second provisioning unit 100g and an encoding unit 100h. In Fig. 3, the apparatus 100 is formed as a server unit.

The first provisioning unit 100a is configured to provide an existing model m_old (see Fig. 1A) and a new model m new (see Fig. 1A), wherein the existing model m_old describes an existing version of a software of the device 10 and the new model m_new describes a new version of the software.

Further, the determination unit 100b is configured to determine a model difference m diff (see Fig. 1A) between the existing model m_old and the new model m_new.

Moreover, the transfer unit 100c is configured to transfer the determined model difference m_diff by applying a machine-readable language on the determined model difference m_diff into a specific abstract graph ASG (see Fig. 1B) which represents the determined model difference m_diff as a set of graphs gph (see Fig. 1B).

In addition, the application unit 100d is configured to apply a graph mining unit to the set of graphs gph for identifying, in dependence on specific parameters, specific types of closed subgraphs out of the set of graphs gph, wherein the identified specific types of closed subgraphs include an optimal specific type g_optsub (see Fig. 1D) of a closed subgraph.

Furthermore, the storage unit 100e is configured to store at least the optimal specific type g_optsub of a closed subgraph and to generate, in dependence on a subgraph compression pattern, a reference REF (see Fig. 1D) to the at least one stored optimal specific type g_optsub of a closed subgraph.

Next, the substitution unit 100f is configured to substitute each of the identified specific types of closed subgraphs which corresponds to the optimal specific type g_optsub of a closed subgraph with the generated reference REF for obtaining a compressed model difference.

Then, the second provisioning unit 100g is configured to provide a compressed patch comprising the compressed model difference and the subgraph compression pattern.

Further, the encoding unit 100h is configured to encode the compressed patch using an encoding algorithm and to transmit the encoded compressed patch as the software patch sw_patch to the at least one device 10.

Fig. 4 shows a block diagram of a communication system 1 for providing a software patch sw_patch (see Fig. IF), in particular a firmware patch, to at least one device 10 (see Fig. 1F) according to an embodiment. The communication system 1 comprises the at least one device 10 which is formed in Fig. 4 as an IoT-device or as a field device, and an apparatus 100 according to Fig. 3. The apparatus 100 (Fig. 1F) is configured to transmit the software patch sw_patch to the at least one device 10. The at least one device 10 is configured to update the existing version of the software of the at least one device 10 to the new version of the software by processing the software patch sw_patch on the at least one device 10 (see method step S90 in Fig. 4).

Further, the processing according to the method step S90 in Fig. 4 also comprises:
decompressing the transmitted encoded compressed patch by using a specific decompression algorithm which uses the subgraph compression pattern to obtain a decompressed patch,
copying the software, in particular firmware, comprising the existing model m old (see Fig. 1A) running on the at least one device 10 to a new storage partition of the at least one device 10,
applying the decompressed patch on the existing model m_old of the software for updating the existing version of the software of the at least one device 10 to the new version of the software.

Although the present invention has been described in accordance with preferred embodiments, it is obvious for the person skilled in the art that modifications are possible in all embodiments.

### Reference Numerals:

- 1: communication system
- 10: device
- 100: apparatus
- 100a: first provisioning unit
- 100b: determination unit
- 100c: transfer unit
- 100d: application unit
- 100e: storage unit
- 100f: substitution unit
- 100g: second provisioning unit
- 100h: encoding unit

- ASG: specific abstract graph
- CN: contracted node
- e1: first edge
- e2: second edge
- e3: third edge
- g_optsub: optimal specific type
- gph: graph
- g1: first subgraph
- g2: second subgraph
- g3: closed subgraph (subgraph)
- m_diff: model difference
- m new: new model
- m_new*: specific new model
- m_old: existing model
- REF: reference
- sw_patch: software patch

- S10: method step
- S20: method step
- S30: method step
- S40: method step
- S50: method step
- S60: method step
- S70: method step
- S80: method step
- S90: method step

### References

[1] Schmidt, Douglas C.: "Model-driven engineering", Computer-IEEE Computer Society-39.2 (2006): 25
[2] L. Erazo-Garzón, A. Roman, J. Moyano-Dután and P. Cedillo: "Models@runtime and Internet of Things: A Systematic Literature Review", Second International Conference on Information Systems and Software Technologies (ICI2ST), 2021, pp. 128-134
[3] Yan, Xifeng, and Jiawei Han.: "Closegraph: mining closed frequent graph patterns", Proceedings of the ninth ACM SIGKDD international conference on Knowledge discovery and data mining, 2003
[4] https://datatracker.ietf.org/doc/html/rfc1951
[5] https://www.omg.org/spec/XMI/
[6] https://webstore.iec.ch/publication/4552

## Claims

1. Computer-implemented method for providing a software patch (sw_patch), in particular a firmware patch, to at least one device (10), the method comprising:
a) providing (S10) an existing model (m_old) and a new model (m_new), wherein the existing model (m_old) describes an existing version of a software of the device (10) and the new model (m_new) describes a new version of the software,
b) determining (S20) a model difference (m _diff) between the existing model (m_old) and the new model (m_new),
c) transferring (S30) the determined model difference (m_diff) by applying a machine-readable language on the determined model difference (m _diff) into a specific abstract graph (ASG) which represents the determined model difference (m_diff) as a set of graphs (gph),
d) applying (S40) a graph mining unit to the set of graphs (gph) for identifying, in dependence on specific parameters, specific types of closed subgraphs out of the set of graphs (gph), wherein the identified specific types of closed subgraphs include an optimal specific type (g_optsub) of a closed subgraph,
e) storing (S50) at least the optimal specific type (g_optsub) of a closed subgraph and generating, in dependence on a subgraph compression pattern, a reference (REF) to the at least one stored optimal specific type (g_optsub) of a closed subgraph,
f) substituting (S60) each of the identified specific types of closed subgraphs which corresponds to the optimal specific type (g_optsub) of a closed subgraph with the generated reference (REF) for obtaining a compressed model difference,
g) providing (S70) a compressed patch comprising the compressed model difference and the subgraph compression pattern, and
h) encoding (S80) the compressed patch using an encoding algorithm and transmitting the encoded compressed patch as the software patch (sw_patch) to the at least one device (10).

2. Method according to claim 1,
**characterized in**
**that** a certain graph out of the set of graphs (gph) is identified as a specific type of a closed subgraph if the certain graph fulfills the specific parameters, wherein the specific parameters are fulfilled if the graph is present in the set of graphs (gph) with a specific frequency, has a specific size with respect to its number of nodes and/or edges and is inextendible, wherein a graph is inextendible if an adding of nodes and/or edges to the graph changes at least one of the specific parameters of the graph, in particular the specific frequency.

3. Method according to claim 2,
**characterized in**
**that** identifying according to step d) (S40) further includes:
determining a compression ability for each identified specific type of closed subgraphs in dependence on the specific parameters for identifying at least the optimal specific type (g_optsub) of a closed subgraph out of the identified specific types of closed subgraphs, wherein the optimal specific type (g_optsub) of a closed subgraph has a maximum compression ability with respect to the specific frequency and the specific size.

4. Method according to one of claims 1 - 3,
**characterized in**
**that** the substituting according to step f) (S60) further includes:
substituting at least a subset of nodes and/or edges of each of the identified specific types of closed subgraphs which corresponds to the optimal specific type (g_optsub) of a closed subgraph with the generated reference (REF) for obtaining the compressed model difference.

5. Method according to one of claims 1 - 4,
**characterized in**
**that** the subgraph compression pattern defines which at least one subset of nodes and/or edges of the optimal specific type (g_optsub) of a closed subgraph is used when generating the reference (REF) and defines, in dependence on which specific graph attributes the at least one subset of nodes and/or edges is used when generating the reference (REF).

6. Method according to one of claims 1 - 5,
**characterized in**
**that** the compressed model difference comprises a set of subgraphs, wherein the step d) (S40) further includes:
applying the graph mining unit to the set of subgraphs of the compressed model difference for identifying, in dependence on the specific parameters, specific types of closed subsubgraphs out of the set of subgraphs, wherein the identified specific types of closed subsubgraphs include an optimal specific type of a closed subsubgraph,
wherein the step e) (S50) further includes:
storing the optimal specific type of a closed subsubgraph and generating, in dependence on the subgraph compression pattern, a further reference to the at least one stored optimal specific type of a closed subsubgraph,
wherein the step f) (S60) further includes:
substituting each of the identified specific types of closed subsubgraphs which corresponds to the optimal specific type of a closed subsubgraph with the generated further reference for obtaining a further compressed model difference.

7. Method according to one of claims 1 - 6,
**characterized in**
**that** at least one of the existing model (m_old), the new model (m_new), the compressed patch and/or the compressed model difference is represented as a specific abstract graph (ASG).

8. Method according to one of claims 1 - 7,
**characterized in**
**that** the encoding algorithm includes a first encoding scheme for transferring the compressed patch into a first data format for obtaining a compressed patch in the form of the first data format, wherein the encoding algorithm includes a second encoding scheme for transferring the compressed patch in the form of the first data format into a second data format for obtaining the encoded compressed patch, wherein the software patch (sw_patch) is formed as a binary file.

9. Method according to one of claims 1 - 8,
**characterized in**
**that** the transmitting in step g) (S80) is performed wireless, in particular by using a cellular network, a low power wide area network, in particular a long range wide area network, or a wireless local area network.

10. Method according to one of claims 1 - 9,
**characterized in**
**that** the device (10) is formed as an end-device, in particular a mobile end-device, as an IoT-device or as a field device.

11. Method according to one of claims 1 - 10,
**characterized by**:
i) updating (S90) the existing version of the software of the at least one device (10) to the new version of the software by processing the transmitted encoded compressed patch on the at least one device (10).

12. Method according to claim 11,
**characterized in**
**that** the processing according to step i) (S90) includes:
decompressing the transmitted encoded compressed patch by using a specific decompression algorithm which uses the subgraph compression pattern to obtain a decompressed patch,
copying the software, in particular firmware, comprising the existing model (m_old) running on the at least one device (10) to a new storage partition of the at least one device (10),
applying the decompressed patch on the existing model (m_old) of the software for updating the existing version of the software of the at least one device (10) to the new version of the software.

13. A computer program product comprising a program code for executing the computer-implemented method according to one of claims 1 - 12 when run on at least one computer.

14. Apparatus (100), in particular a server unit, for providing a software patch (sw_patch), in particular a firmware patch, to at least one device (10), the apparatus (100) comprising:
a first provisioning unit (100a) for providing an existing model (m_old) and a new model (m _new), wherein the existing model (m_old) describes an existing version of a software of the device and the new model (m_new) describes a new version of the software,
a determination unit (100b) for determining a model difference (m_diff) between the existing model (m_old) and the new model (m new),
a transfer unit (100c) for transferring the determined model difference (m _diff) by applying a machine-readable language on the determined model difference (m _diff) into a specific abstract graph (ASG) which represents the determined model difference (m_diff) as a set of graphs (gph),
an application unit (100d) for applying a graph mining unit to the set of graphs (gph) for identifying, in dependence on specific parameters, specific types of closed subgraphs out of the set of graphs (gph), wherein the identified specific types of closed subgraphs include an optimal specific type (g_optsub) of a closed subgraph,
a storage unit (100e) for storing at least the optimal specific type (g_optsub) of a closed subgraph and for generating, in dependence on a subgraph compression pattern, a reference (REF) to the at least one stored optimal specific type (g_optsub) of a closed subgraph,
a substitution unit (100f) for substituting each of the identified specific types of closed subgraphs which corresponds to the optimal specific type (g_optsub) of a closed subgraph with the generated reference (REF) for obtaining a compressed model difference,
a second provisioning (100g) unit for providing a compressed patch comprising the compressed model difference and the subgraph compression pattern, and
an encoding unit (100h) for encoding the compressed patch using an encoding algorithm and for transmitting the encoded compressed patch as the software patch (sw_patch) to the at least one device (10).

15. Communication system (1) for providing a software patch (sw_patch), in particular a firmware patch, to at least one device (10), the communication system (1) comprising
the apparatus (100) according to claim 14, and
the at least one device (10), in particular formed as an end-device,
wherein the apparatus (100) is configured to transmit the software patch (sw_patch) to the at least one device (10) and the at least one device (10) is configured to update the existing version of the software of the at least one device (10) to the new version of the software by processing the software patch (sw_patch) on the at least one device (10).
